# EUROPEAN PATENT APPLICATION

(11) **EP 3 255 586 A1**
(43) Date of publication of application: **13.12.2017**
(21) Application number: 17164017.0
(22) Date of filing: 30.03.2017
(51) Int. Cl.: G06K 9/46, G06K 9/62, G06N 3/02, G06T 11/00

(54) **METHOD, PROGRAM, AND APPARATUS FOR COMPARING DATA GRAPHS**

(30) Priority: 06.06.2016 GB 201609871; 06.06.2016 DE 102016209932
(71) Applicant: FUJITSU LIMITED, Kawasaki-shi, Kanagawa 211-8588 (JP)
(72) Inventor: HU, Bo, Winchester, Hampshire SO23 7DT (GB)
(74) Representative: Hutchison, James

(57) **Abstract**

Embodiments include a computer-implemented method, comprising: applying a transformation process to: a first portion of graph data to generate a first image, and a second portion of graph data to generate a second image; applying an extracting process to: the first image to extract a first feature vector, and the second image to extract a second feature vector; wherein both the first feature vector and the second feature vector comprise quantifiable values for each of a common set of features; computing a similarity value, the similarity value being a value representing the similarity between the first feature vector and the second feature vector based on the respective quantifiable values for the common set of features; and outputting the computed similarity value.

## Description

The present invention lies in the field of data analysis. In particular, the invention relates to comparison of data graphs.

Data graphs are complex, and performing comparisons of two data graphs or two portions of graph data is computationally expensive. Comparisons of data graphs are therefore either not performed, delayed until system idle time, or performed at significant performance cost to a computer or computer network executing the comparison. A multitude of technological applications of data graph comparisons are not realised due to the computational expense.

Graph similarity computation is hard and computationally expensive. Thus far, one of the following approaches is taken: given *G*₁ and *G*₂
1. Brute force: iterating all vertices and edges to compare two graphs
2. Graph edit distance: assign numeric values to operations that transform graph *G*₁ into *G*₂. The overall similarity is the aggregation of all the operations. This approach can still have high complexity and grow exponentially with the size of the graphs. Feature extraction: based on a predefined list of features, compute values of such features of *G*₁ and *G*₂. Domain heuristics sometimes used in feature extraction.
In general, existing approaches suffer from computational complexity or the complexity and arbitrariness of feature selection.

It is desirable to devise a less computationally expensive and more scalable technique for comparing data graphs.

Embodiments include a computer-implemented method, comprising: applying a transformation process to: a first portion of graph data to generate a first image, and a second portion of graph data to generate a second image; applying an extracting process to: the first image to extract a first feature vector, and the second image to extract a second feature vector; wherein both the first feature vector and the second feature vector comprise quantifiable values for each of a common set of features; computing a similarity value, the similarity value being a value representing the similarity between the first feature vector and the second feature vector based on the respective quantifiable values for the common set of features; and outputting the computed similarity value.

Advantageously, embodiments provide a mechanism for comparing portions of graph data by transforming the graph data into an image, extracting features from the image, and comparing features extracted in the same way from another portion of graph data. In other words, image comparison techniques are leveraged in order to compare portions of graph data.

Procedures that require comparisons of graph data, such as reconciliation processing, can be performed in a manner which is computationally efficient and which includes intermediate representations of the graph data that can be usefully stored for future comparisons. Embodiments utilise the principle of summarising complex data into a simplified format for comparison, in a specific manner which is particularly effective in the field of comparing graph data.

The images are manifest as image data, so it may be that the extracting process is considered to be applied to the image data. The image data may be a tuple of <position, pixel value> for a two-dimensional array of pixels.

Optionally, the first and second portions of graph data each comprise a plurality of vertices interconnected by a plurality of edges, each of the edges connecting one of the vertices as a source vertex to another of the vertices as a destination vertex; and the transformation process comprises: assigning each vertex in the respective portion of graph data a unique position in a first of the two dimensions and a unique position in a second of the two dimensions; setting a pixel value at each entry in a two-dimensional array of pixel values, by: for each of the plurality of edges, setting the pixel value at a corresponding entry as a value from a first range of values, the corresponding entry being the entry at the unique position assigned to the source vertex in the first dimension and the unique position assigned to the destination vertex in the second dimension; and setting the pixel values at the remaining array entries at a value outside of the first range of values.

The images may also be referred to as image data. The two-dimensional array of pixel values is the image data. The image data may also include metadata, for example, an ID assigned to the portion of graph data.

The order of the unique positions assigned to the vertices is the same in both of the two dimensions.

The vertices may be ordered in the portion of graph data, in which case it may be that the ordering from the portion of graph data is preserved in assigning the unique positions to the vertices. For example, if the vertices represent locations, then the locations may be ordered according to their latitude position or longitude position. Alternatively, if the vertices are labelled in the portion of graph data, then it may be that an ordering metric (such as numerical order, alphabetical order, or alphanumerical order) can be applied to the vertices in assigning the unique positions, the order of unique positions being determined by the ordering metric. It may be that the same ordering metric is applied to both of the two portions of graph data in the transformation process.

The graph data may comprise bi-directional edges, each of the bi-directional edges connecting two vertices to one another as both a source vertex and a destination vertex.

The portion of graph data may comprise exclusively bi-directional edges. The use of bi-directional edges is dependent upon the domain being modelled/represented by the graph data. For example, consider modelling a road network, with vertices representing towns and weighted edges representing the shortest route between two towns represented by the vertices connected by the edge. The information represented by the edge is not directional, so the edge may be bi-directional. On the other hand, consider modelling a telecommunications network in which messages are transmitted between nodes, with a number of messages sent from node i to node j being represented by a weighted edge from node i to node j. Messages are inherently directional, and therefore the edges are directional rather than bi-directional.

Optionally, the graph data may comprise a plurality of edges weighted by respective quantitative labels, in such a case, setting the pixel value at the corresponding entry for each of the edges weighted by a quantitative label comprises setting the pixel value at the corresponding entry as a value from the first range of values representing the quantitative label.

A quantitative label may be a number, that is, a numerical value. The setting the pixel value as a value from the first range of values representing the quantitative label may comprise scaling the quantitative label. For example, a scan may be performed on the quantitative labels in either the portion of graph data being transformed, or the two portions of graph data as a collective, to establish the maximum quantity of the quantitative labels, with the scaling being set so that the maximum quantity is set at the maximum value from the range of possible pixel values, and the scaling is preserved for all pixels.

Advantageously, the inventors have realised that weighted edges can be converted into pixel values, and, by appropriate arrangement of the pixel values, the graph data be represented as image data, which can be subjected to comparison by techniques specialised for image data.

Each of the plurality of vertices in the graph data represents an entity, and the transformation process may include: determining pairs of vertices, with one vertex from each of the first and second portions of graph data, that represent the same entity, and, for each determined pair, assigning the vertices in the pair to equivalent unique positions in the first and second dimensions of the respective two-dimensional array of pixel values.

For example, it may be that the vertices representing the same entity in the two portions of graph data are attributed the same label. Alternatively, it may that some mapping is required to establish which vertex in the first portion of graph data represents the same entity as a given vertex from the second portion of graph data. The mapping may be, for example, a translation between languages, or a reference to a mapping lookup table.

The extraction process extracts a feature vector from the first image and a feature vector from the second image. The extraction process may comprise applying an artificial neural network to the respective image to extract the feature vector. In particular, the extracting process may comprise applying a convolutional neural network to the respective image to extract the respective feature vector.

The convolutional neural network may also be referred to as a convolutional neural network model. Specifically, the convolutional neural network model may be an image classification neural network model. Applying a convolutional neural network is forward propagating the convolutional neural network using the respective image as input. The convolutional neural network is applied to the entirety of the respective images.

Advantageously, convolutional neural networks are a specialised form of neural network especially effective in the field of image classification. Embodiments provide a mechanism to leverage the convolutional neural network model in the field of graph data, by transforming the graph data to image data.

Optionally, embodiments may comprise, or be suitable for: training an image classification convolutional neural network model, and storing the trained image classification convolutional neural network model as the convolutional neural network, the training comprising: obtaining a training set of image pairs, and for image pair from among the training set of image pairs, obtaining a corresponding target similarity value; and for each image pair from among the training set image pairs, in turn: extracting a feature vector from each of the pair of images by executing the image classification neural model on the respective images, computing a similarity value representing the similarity between the two feature vectors, and, if there is a difference between the computed similarity value and the target similarity value, performing backward error propagation to modify the image classification neural model to reduce the difference, wherein the extracting, computing, and backward error propagation are performed iteratively until either a predefined maximum number of iterations is reached or the difference falls below a threshold value.

The training procedure may be a backward error propagation procedure, in which the difference between the computed similarity value generated by the feature vectors extracted by the image classification neural model and the target similarity value for a pair of images is minimised by adapting parameters in the convolutional layers of the image classification neural model, such as weighting factors and bias factors, or other modification processes at each layer of the model, based on the gradient of the difference with respect to the adaptable factors. It may be that the training procedure is also used to adapt weighting factors of input nodes other than temporal processor nodes. However, embodiments of the present invention are not limited by the particular training procedure employed.

For example, it may be that the training set image pairs are pairs of images generated by obtaining sample portions of graph data, and performing the transformation process on the sample portions of graph data, to obtain sample image data. Obtaining a corresponding target similarity value may be a process of executing an existing graph similarity computation on the sample portions of graph data, with the similarity value so obtained (possibly subject to scaling), being set as the target similarity value. The existing graph similarity computation may be a brute force computation (iterate through all vertices and edges to compare the two graphs), or a graph edit distance (assign numeric values to operations that transform one sample portion into another, the overall similarity is the aggregation of all the operations). Advantageously, the computationally expensive existing graph similarity procedures are executed as part of the training, so that the convolutional neural network model, which is less computationally expensive to execute, can be trained for future executions. In other words, the training procedure may be computationally expensive, and intentionally so in order that appropriate target similarity values are used, with the payoff being that, once trained, future comparisons of graph data can be performed using the less computationally expensive trained convolutional neural network to compare images into which the graph data has been transformed.

As a further alternative, obtaining the training set of image pairs may comprise downloading image pairs from an image repository. Or, obtaining the training set of image pairs may comprise: generating a set of original raster images; and for each of the set of original raster images, producing one or more new images by editing the original raster image, the editing including rotating and/or random pixel value editing, adding the original raster image with each of the one or more new images to the training set of image pairs. In such a case, obtaining the target similarity value for each of the image pairs may comprise quantifying a degree of the editing performed to obtain the new image from the original image in the pair, and representing the degree of editing in the target similarity value.

In other words, an edit distance between the two images is calculated, wherein numeric values are assigned to operations that transform the original image into the new image, and the target similarity value is the aggregation of all the operations.

Embodiments of another aspect include a computer-implemented method in a graph data storage system storing a data graph divided into portions of graph data, each portion of graph data being stored on one from among a plurality of physical data storage units, the method comprising: receiving a portion of graph data for addition to the data graph; selecting as candidate physical data storage units from among the plurality of physical data storage units the physical data storage units having sufficient available storage capacity to store the received portion of graph data; for each candidate physical data storage unit, executing the computer-implemented method of an embodiment for comparing first and second portions of graph data, for the or each portion of graph data stored thereon, with the received portion of graph data as the first portion of graph data and the stored portion of graph data as the second portion of graph data, recording the or each computed similarity value for the candidate physical data storage unit, each candidate physical data storage unit having either a single computed similarity value or multiple computed similarity values, and if the candidate physical data storage unit has multiple computed similarity values, combining the multiple computed similarity values into a single computed similarity value by calculating a mean or maximum value of the more than one computed similarity values; selecting the candidate physical data storage unit having the greatest single similarity value to store the received portion of graph data, and writing the received portion of graph data into the selected candidate physical data storage unit. The received portion of graph data, once written into the selected candidate physical data storage unit, can be queried along with the graph database via a single graph database management system.

Embodiments may include an apparatus comprising: a transformation processor configured to apply a transformation process to: a first portion of graph data to generate a first image, and a second portion of graph data to generate a second image; an extraction processor configured to apply an extraction process to: the first image to extract a first feature vector, and the second image to extract a second feature vector; wherein both the first feature vector and the second feature vector comprise quantifiable values for each of a common set of features; a similarity value computer configured to compute a similarity value, the similarity value being a value representing the similarity between the first feature vector and the second feature vector based on the respective quantifiable values for the common set of features; and an outputter configured to output the computed similarity value.

Embodiments may include: an apparatus comprising: transformation means for applying a transformation process to: a first portion of graph data to generate a first image, and a second portion of graph data to generate a second image; extraction means for applying an extraction process to: the first image to extract a first feature vector, and the second image to extract a second feature vector; wherein both the first feature vector and the second feature vector comprise quantifiable values for each of a common set of features; similarity value computing means for computing a similarity value, the similarity value being a value representing the similarity between the first feature vector and the second feature vector based on the respective quantifiable values for the common set of features; and outputting means for outputting the computed similarity value.

Embodiments may include software, such as a computer program, which when executed by a computing apparatus, causes the computing apparatus to perform a method embodying the present invention. Such a computing apparatus may be a computing device, such as a server or other computer, or may be a network of interconnected computing devices operating in collaboration with one another. The software or computer program may be stored on a computer readable medium. The computer readable medium may be a non-transitory computer-readable medium.

A detailed description of embodiments will now be provided with reference to the accompanying drawings, in which:
Figure 1 is a schematic diagram illustrating the flow of processing in an embodiment;
Figure 2a illustrates a visualisation of a portion of directed graph data;
Figure 2b illustrating an exemplary encoding of the graph data of Figure 2a;
Figure 3 illustrates an apparatus of an embodiment;
Figure 4 illustrates an exemplary system architecture underlying an apparatus of an embodiment;
Figure 5 illustrates a method of an embodiment;
Figure 6a illustrates a visualisation of a portion of graph data;
Figure 6b illustrates a grayscale image generated by an embodiment;
Figure 7 illustrates a system of an embodiment; and
Figure 8 illustrates an example of a convolutional neural network model.

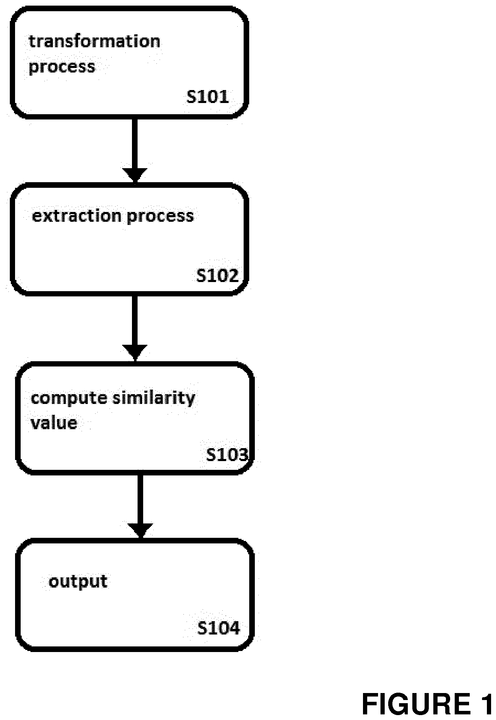

Figure 1 is a schematic diagram illustrating the flow of processing in an embodiment.

At step S101 a transformation process is applied to a first portion of graph data to generate a first image, and a second portion of graph data to generate a second image. The transformation process takes, as inputs, two portions of graph data, transforms each portion of graph data to a respective image, and outputs the respective images. The transformation process comprises extracting information from the respective portions of graph data, and converting the extracted information to a position and pixel value pairing, the image being a 2-dimensional array of pixel values.

The portions of graph data may be entire graphs. A graph is a tuple <V, E> where V is a finite set of entities (potentially accompanied with vertex labels) and E is a finite set of relation (*a,b*) ∈*V*×*V* (potentially accompanied with edge labels). Edges can be either directed (pointing from the first vertex *a* to the second vertex *b*) or undirected. Examples of graphs are computer networks, road networks, online or real-life social network, etc, where computers, properties, persons/avatars are vertices and fibre-cables, roads and contacts are edges. Among these examples, computer and road networks can be bi-directional or undirected while social network is likely to be directed. Any of these examples can be represented as a portions of graph data.

The transformation process may include, or be preceded by, an obtaining step of obtaining the first and second portions of graph data. The computer-implemented method may be a computer program that can be executed and which includes an interface for accepting inputs, or it may be that inputs, such as physical addresses of graph data portions, are provided as arguments in a command line instruction (or equivalent) that initiates the method.

The computer-implemented method may include storing the data that is being processed, either until it has been processed, at which point it is discarded, or the various versions of the graph data (the portion of graph data, the image, and/or the feature vector) may all be retained in storage until a user directs them to either be maintained, transferred to another location, or discarded. It is noted that a user in this context is taken to be a person or entity initiating the computer-implemented method and selecting the first and second portions of graph data upon which the method is to be performed.

There is no limitation on the sizes of graphs and images. In practice, the graphs can be stored in a distributed storage and encoded as an adjacency matrix, with each server holding a tile of the adjacency matrix.

The transformation process transforms the portion of graph data into image data. There may be intermediate manifestations of the data produced during the transformation process. For example, the portions of graph data, if they are not in the form of an adjacency matrix on input to the transformation process, may be converted to adjacency matrices, and then to image data.

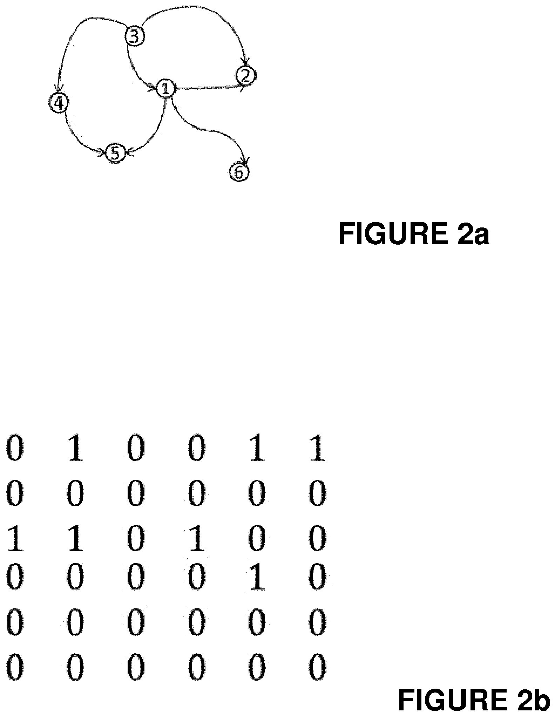

Figure 2a illustrates a visualisation of a portion of directed graph data, with Figure 2b illustrating an exemplary encoding of the graph. The transformation process may include converting the first and/or second portions of graph data from their native encoding to an adjacency matrix, and from the adjacency matrix to image data. The images represent the respective portions of graph data. Some information present in the graph data, such as vertex labels, is lost in the image representation, so that the image may be considered to be extracted from, or a distillation of, the portion of graph data.

The adjacency matrix includes a row and column for each vertex. Each edge is represented by a "1" at the matrix entry at the row of the source vertex and the column of the destination vertex. The adjacency matrix can be converted to image data by converting the adjacency matrix entries to pixel values, with the positions being maintained (that is, the adjacency matrix entry at position (i, j) is converted to the pixel value for the pixel at (i, j)). The conversion is dependent upon the range of pixel values allowed in the image data being generated. For example, it may be that each pixel can either be black or white, so that the "0" and "1" values need not be altered. Alternatively, it may be that the edges are weighted and the matrix entries represent the edge weights and can be one of a range of values. That range of values may then be up-scaled or down-scaled to conform to the range of pixel values of the image data.

The image data may be a 2-dimensional array of pixel values, optionally also including image metadata. The 2-dimensional array may be compiled as though it were an adjacency matrix, the exception being that a value at an entry representing an edge is selected from a range of pixel values (in the adjacency matrix, on the other hand, values are between 0 and 1). For example, the range of pixel values may be 0-255. The transformation process may comprise assigning each vertex in the respective portion of graph data a unique position in a first of the two dimensions and a unique position in a second of the two dimensions, setting a pixel value at each entry in a two-dimensional array of pixel values, by: for each of the plurality of edges, setting the pixel value at a corresponding entry as a value from a first range of values, the corresponding entry being the entry at the unique position assigned to the source vertex in the first dimension and the unique position assigned to the destination vertex in the second dimension; and setting the pixel values at the remaining array entries at a value outside of the first range of values. For example, the value outside of the first range of values may be the value at one extreme of the range of possible pixel values, and the first range of pixel values be all other pixel values from the range of possible pixel values.

The pixel value may represent the colour of a pixel. In examples in which there is a single pixel value per matrix entry, the image is a monochrome image, and the pixel value corresponds to the intensity of the monochrome at that pixel. For example, the image may be grayscale, with the range of possible pixel values from minimum value (e.g. 0) to maximum value (e.g. 255) corresponding to white to black.

The generated images are stored as image data. The images may be stored as raw image data, as bitmaps, or as compressed image files such as jpeg or png. The stored images may replace the respective portions of graph data in storage, or may be stored in association with the respective portions of graph data.

The transformation step may also include, if there is a difference in the number of pixels in the two images, adding rows and columns of empty, or zero-value, pixels to the smaller of the two images until the two images are equal in size (that is, the first image is m x n pixels, the second image is j x k pixels, and j=m and k=n).

Optionally, there may be a maximum image size that the implementation is configured to accept (determined in dependence upon factors such as available processing hardware, required time to result etc), and that all images are increased to the maximum image size (both in training a model for feature extraction and in executing a model for feature extraction) by adding rows and columns of empty, or zero-value, pixels. In other words, the image size may be fixed, with empty pixels added to convert smaller images to the fixed image size.

Next, at step S102, an extraction process is performed on the images. The extraction process is a process applied to the images to extract respective feature vectors. The input to the extraction process is the first image and the second image, and the extraction process transforms the images to respective feature vectors as an output. The feature vectors comprise quantifiable values (i.e. numbers) for each of a common set of features. The common set of features are features of the images, and may be extracted by subjecting the images to a convolutional neural network model.

A convolutional neural network model is an exemplary model for performing the extraction process. The input data, the images, may be large in size. The convolutional neural network model effectively performs dimension reduction, reducing the image to a vector representing features of the image.

The convolutional neural network model may be a pre-trained image classification convolutional neural network model that is applied by the extraction process. The training may be performed as part of the computer-implemented method, or the training may be performed by a third party.

The feature vectors may be stored. The feature vector may replace the respective portion of graph data and/or the respective image data in storage. For example, the portion of graph data may be stored in association with its feature vector, so that future comparisons involving the portion of graph data can be performed in the absence of the transformation and extraction processes.

At step S103, a similarity value, that is, a value representing the similarity between the first feature vector and the second feature vector is computed based on the respective quantifiable values for the common set of features. The computation may be, for example, a cosine distance computation. The output may be a value between 0 and 1, or a value scaled in some other way and representing the similarity of the two feature vectors extracted in step S102.

At step S104, the computed similarity value is output. The output may be returned to the entity initiating the computer-implemented method, or may be transmitted to a physical address specified at the initiation of the method. The output represents the similarity of the two feature vectors, and in turn therefore the similarity of the two images, and ultimately the two portions of graph data. The computed similarity value may be a Boolean value, i.e., a value representing one of two options: either the portions of graph data (or, more specifically, the feature vectors extracting from the images into which the portions of graph data are transformed) are similar, or they are not similar. Alternatively, there may be a range of values, for example between 0 and 1, with the output similarity value being a value from the range representing the computed level of similarity.

For example, the first and second portions of graph data may be representations of road networks (vertices representing junctions, weighted edges representing distance or travel time between connected junctions). The output computed similarity value may be utilised to determine whether traffic calming or traffic control measures from one of the road networks could be applied to the other. In an alternative utilisation, the first and second data portions may be representations of messaging or communication systems, such as a telecommunication or computing network, wherein the vertices represent nodes or terminals, and the edges represent messages or data transmitted between the nodes during respective time periods. The edges may be weighted with the weight representing a number of messages or amount of data transmitted. Obtaining a similarity value enables activity in different networks to be compared, or activity in the same network during different time periods to be compared, in a computationally efficient manner. Such comparisons may be useful for pattern matching and/or identifying faults or suspect network activity. For example, a data graph representing a time period may be compared with the or each data graph representing one or more preceding time periods, a computed similarity value below a predefined threshold (or a computed similarity value of "no" or otherwise representing dissimilarity) for a predefined proportion or more of the one or more preceding time periods may raise an alert (for example, to a user terminal or other output destination) that unusual activity (such as a fault or surge) took place in the time period in question.

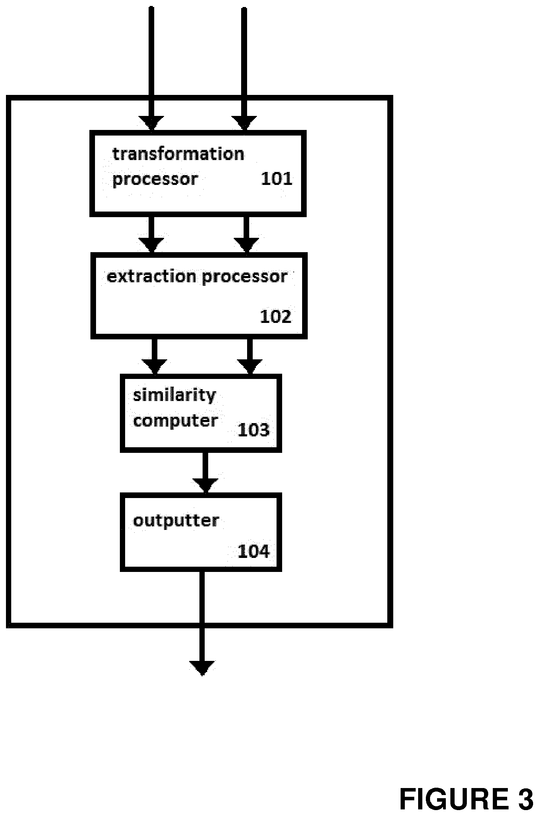

Figure 3 illustrates an apparatus of an embodiment. The apparatus comprises a transformation processor 101, an extraction processor 102, a similarity computer 103, and an outputter 104.

The transformation processor 101 is configured to receive or obtain, as inputs, a first portion of graph data and a second portion of graph data (as represented by the arrows directed into the transformation processor). The transformation processor 101 is configured to perform the transformation process of step S101 of Figure 1, or a transformation process as described elsewhere in this document, and thereby to generate a first image, manifest as first image data, and a second image, manifest as second image data. The outgoing arrows from the transformation processor 101 in Figure 3 represent the transfer of the first image data from the transformation processor 101 to the extraction processor 102, and the transfer of the second image data from the transformation processor 101 to the extraction processor 102.

The extraction processor 102 is configured to receive or obtain, as inputs, the first image data and the second image data. The extraction processor 102 is configured to perform the extraction process of step S102 of Figure 1, or an extraction process as described elsewhere in this document, and thereby to extract a first feature vector from the first image data and a second feature vector from the second image data. For example, the extraction processor 102 may be configured to apply an image convolutional neural network to the image data to extract the respective feature vector. The outgoing arrows from the extraction processor 102 represent the transfer of the first and second feature vectors from the extraction processor 102 to the similarity computer 103.

The similarity computer 103 is configured to receive or obtain, as inputs, the first feature vector and the second feature vector. The similarity computer 103 is configured to perform the computing a similarity value of step S103, or a procedure for computing a similarity value from two feature vectors described elsewhere in this document, and thereby to compute a similarity value representing the similarity between the first feature vector and the second feature vector. For example, the similarity computer 103 may perform a cosine distance comparison. The similarity computer 103 is configured to transfer the computed similarity value to the outputter 104.

The outputter 104 is configured to obtain or receive the computed similarity value from the similarity computer, and to output the similarity value to an output destination. The outputter 104 is configured to perform the output step at S104 of Figure 1. The output destination may be a specified storage location. Alternatively, the output location may be an apparatus or entity providing the portions of graph data to the transformation processor 101.

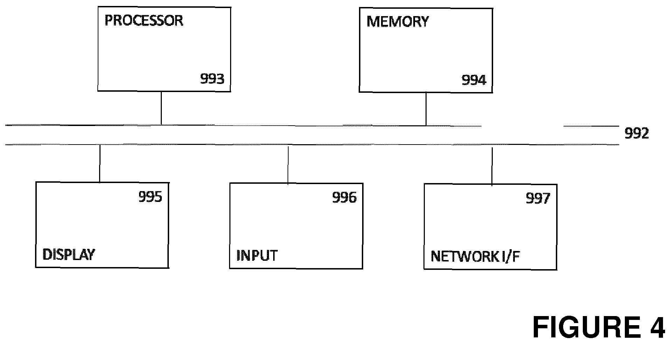

Figure 4 illustrates an exemplary system architecture underlying an apparatus of an embodiment, implementing a computer-implemented method of an embodiment, or executing a program or software of an embodiment..

The system architecture of Figure 4 is a computing device, such as a data storage server, database controller, or server. It may be that the system architecture comprises a number of such computing devices operating cooperatively. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations, for example, the computer-implemented method of an embodiment (such as that of Figure 1), or to operate as a functional apparatus of an embodiment (such as that of Figure 3). Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the computer-implemented method of an embodiment (for example, as illustrated in Figure 1) or to implement the various different functions of the trainer or training processor, the transformation processor 101, the extraction processor 102, the similarity value computer 103, and the outputter 104, described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The transformation processor 101 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second portions of graph data from an entity requiring a similarity comparison of the graph data, which entity may be external to the computing device or may be a program running on the same computing device, and transform the first and second portions of graph data into first and second images, as in step S101 of Figure 1. Furthermore, the processor 993 may execute processing instructions to store the images (or data encoding them) on a connected storage unit and/or to transmit, via the network I/F 997 or via an internal bus, data encoding the first image and data encoding the second image, to the extraction processor.

The extraction processor 102 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second images from the transformation processor 102, and extract from the first and second images the first feature vector and the second feature vector, respectively, as in step S102 of Figure 1. Furthermore, the processor 993 may execute processing instructions to store the feature vectors (or data encoding them) on a connected storage unit and/or to transmit, via the network I/F 997 or via an internal bus, the first and second feature vectors to the similarity value computer 103.

Although not illustrated in Figures 1 & 3, the computer-implemented method of an embodiment may include a training process, and an apparatus of an embodiment may include a training processor, configured to execute the training process. The training process is described elsewhere, and is a process for training (i.e. setting values of configurable parameters in) an image classification neural network model, which model is provided to the extraction processor 102, and is executed or applied to the first and second images at the extraction processor 102 in carrying out step S102. The training processor may be a processor 993 (or plurality thereof) executing processing instructions (a program) stored on a memory 994 and exchanging data via a network I/F 997. In particular, the processor 993 executes processing instructions to receive or obtain, via the network I/F, or via an internal bus within the apparatus, a training set of image pairs, and for image pair from among the training set of image pairs, obtaining a corresponding target similarity value, and training the image classification neural network model using the training set of image pairs and target similarity values. Furthermore, the processor 993 may execute processing instructions to store the trained image classification neural network model on a connected storage unit and/or to transmit, via the network I/F 997 or via an internal bus, trained image classification neural network model to the extraction processor 102.

The similarity value computer 103 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the first and second feature vectors from the extraction processor 103, and compute a similarity value representing the similarity between the two feature vectors, as in step S103 of Figure 1. Furthermore, the processor 993 may execute processing instructions to store the computed similarity value on a connected storage unit and/or to transmit, via the network I/F 997 or via an internal bus, the computed similarity value to the outputter 104.

The outputter 104 of Figure 3 may be a processor 993 (or plurality thereof) executing processing instructions (a program) stored on a memory 994 and exchanging data via a network I/F 997. In particular, the processor 993 executes processing instructions to receive, via the network I/F, or via an internal bus within the apparatus, the computed similarity value from the similarity value computer 103, and output the computed similarity value, as in step S104 of Figure 1.

Methods embodying the present invention may be carried out on a computing device such as that illustrated in Figure 4. Such a computing device need not have every component illustrated in Figure 4, and may be composed of a subset of those components. A method embodying the present invention may be carried out by a single computing device in communication with one or more data storage servers via a network. The computing device may be a data storage itself storing the image classification convolutional neural network.

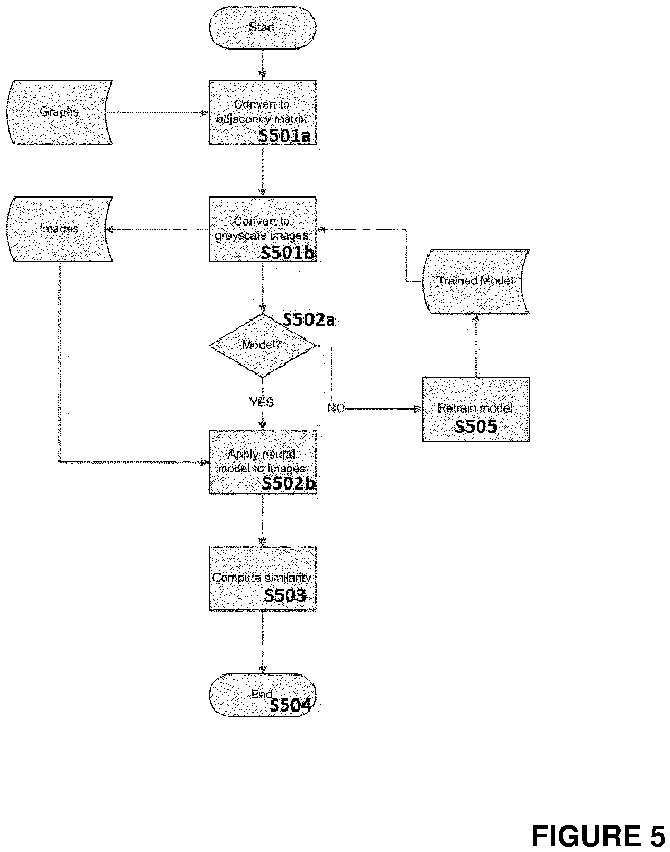

Figure 5 illustrates a method of an embodiment, the method is performed by a system, wherein the system may be, for example, an apparatus such as that illustrated in Figure 3, implemented by the hardware of Figure 4.

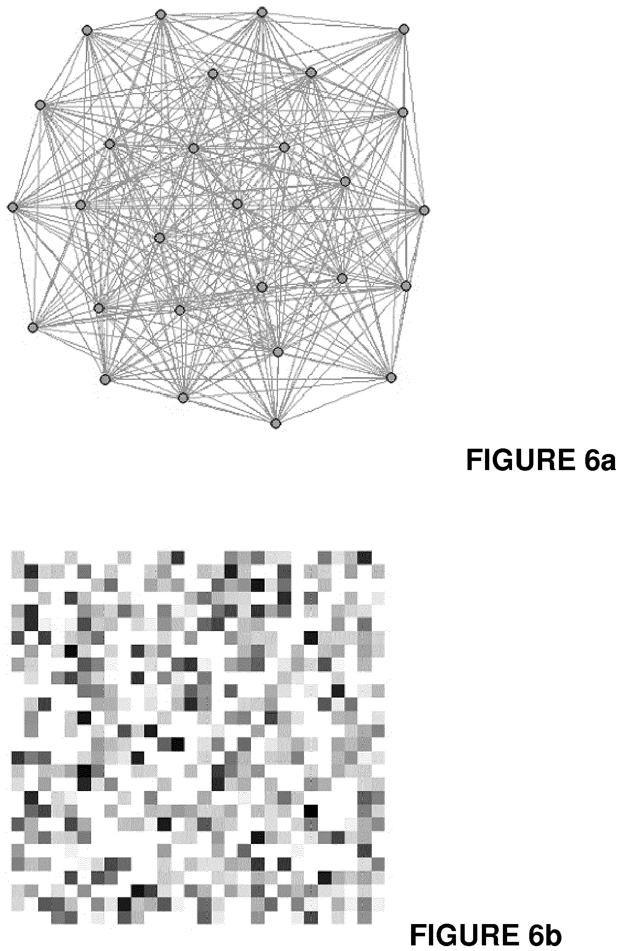

Steps S501 a & S501 b are an example of a transformation process such as that of step S101 of Figure 1. At step S501 a, first and second graphs, which are exemplary of first and second portions of graph data, are loaded into the system in their native representation. The system performs processing to convert the native graph representation (visualised in Figure 2a & Figure 6a) into an adjacency matrix (visualised in Figure 2b). For example, each vertex in the graph is assigned a unique position in a first dimension, in other words, the vertices are ordered. The vertices are each assigned the same unique position in a second dimension. The adjacency matrix is a 2-dimensional matrix. Adjacency is represented by a value at the matrix entry corresponding to adjacent vertices, wherein adjacency is determined by an edge in the graph connecting two vertices. In the case of weighted edges, the matrix entry at the column and row corresponding to the two vertices connected by the weighted edge is a value representing the weight of the weighted edge, noting that some scaling may be executed. Once all edges in the graph are represented in the adjacency matrix, the remaining entries (i.e. those not yet set) are set to 0.

At step S501 b, the two adjacency matrices generated in step S501 a are converted into respective monochrome, for example, grayscale, images. An exemplary grayscale image such as is generated by the transformation process of step S102, or specifically the grayscale image conversion process of step S501b, is illustrated in Figure 6b. Each matrix cell/entry from the respective adjacency matrix is translated into a pixel value. Thus, in the example of weighted edges, the edge weight translates to a pixel value, via optional scaling as a matrix entry. Pixel value represents intensity of colour at a particular pixel (position) in the image. In the example of grayscale, intensity ranges from white to black. It may be necessary to scale up the matrix entries to the full scale of pixel values, or to scale down to the full scale of pixel values, depending on the range of possible pixel values.

At step S502a, it is determined whether a trained model for feature extraction exists. An example of a trained model is a trained image classification convolutional neural network model.

If, at step S502a, it is determined that a trained model for feature extraction does not exist, then a training process is performed at step S505, which is described in more detail below.

If at step S502a it is determined that a trained model for feature extraction does exist, or once a model has been trained at step S505, then, at step S503, the trained model for feature extraction is applied to the first image to generate a first feature vector and applied to the second image to generate a second feature vector. Step S503 is the computing a similarity value of step S103 of Figure 1. For example, the cosine similarity value of the two feature vectors is computed.

The process ends at step S504, with the output being the computed similarity value.

The computed similarity value may be used to determine a physical storage location of a portion of graph data. For example, a graph data storage system may store a data graph distributed across a plurality of physical data storage units. Each physical data storage unit stores one or more portions of graph data composing the data graph. The portions are not necessarily independent of one another, and cross-portion edges may exist in the data graph. Algorithms exist for dividing data graphs into portions for storage. The following procedure for determining a physical storage location for a new portion of graph data may be performed, for example, by a database controller or database management system. Upon receipt of a new portion of graph data for addition to the graph database, it is first determined which of the physical data storage units have capacity to store the new portion. The physical data storage units determined to have capacity to store the new portion may be referred to as candidate physical data storage units. The new portion of graph data is compared with the or each portion of graph data stored on each of the candidate physical data storage units. The comparison is performed using the procedure of an embodiment, for example, steps S501a to S504, or steps S101 to S104. One or more computed similarity values is computed for each candidate physical data storage unit (i.e. one similarity value is computed per portion of graph data already stored on the candidate physical data storage unit). In the case of there being more than one similarity value per portion of graph data, the more than one values are combined into a single value, the single value being calculated either as a mean value of the more than one values, or as a maximum value from among the more than one values. Following said combinations, there is a single similarity value per candidate physical data storage unit. The new portion of graph data is stored on the candidate physical data storage unit having the greatest single similarity value. In the event of a tie, the new portion of graph data is stored on the candidate physical data storage unit having the greatest available storage capacity from among the tied physical data storage units. The rationale is that similar graph data portions are more likely to be queried together, and hence cross-unit graph traversals are reduced.

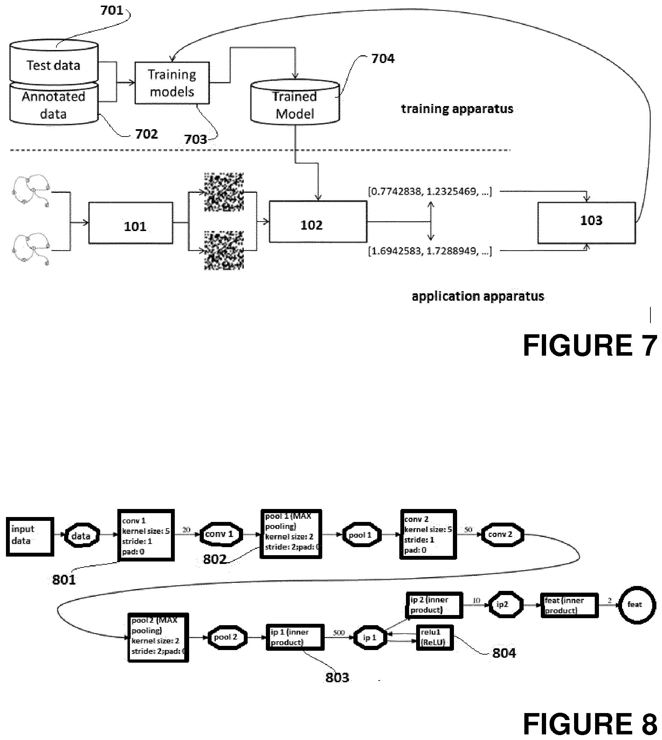

Figure 7 illustrates a system of an embodiment. The particular system of Figure 7 includes a training processor 703, which utilises test data 701 and annotated data 702 to generate a trained model for feature extraction 704 which trained model is accessible by the extraction processor 102 (referred to as a feature computation processor).

The system comprises a hardware architecture such as that illustrated in Figure 4. In particular, a processor performs the processing instructions of the training processor 703, the transformation processor 101, the extraction processor 102, and the similarity value computation processor 103. One or more storage units (memories) store the processing instructions, the trained model for feature extraction 704, the first and second portions of graph data, the first and second images, and the first and second feature vectors.

Like reference numerals are assigned to the components that are in common with the components of Figure 3, and hence the discussion of said components is not repeated here. The components in common with Figure 3 101-103 are referred to as "application apparatus" in the context of Figure 7, which also includes a training apparatus 701-704, that is, an apparatus configured to perform a training process.

The training apparatus is under the control of a training processor 703, and is configured to store test data 701, annotated data 702, and a model that is being trained 704.

For example, the model being trained 704 may be an image classification convolutional neural network model. The test data 701 may be a training set of image pairs, and the annotated data 702 may be a target similarity value for each of the set of image pairs in the training set. The target similarity value is a value representing whether the corresponding pair of images can be considered similar, and may be a binary "yes" or "no", or may be a value, for example between 0 and 1, quantifying the similarity. The test data 701 and annotated data 702 may be combined in a single storage, for example, an indexed table, with each row comprising image data of each of a pair of images, and a target similarity value for the pair.

The pairs of images may be stored as raw image files (i.e. pixel value by pixel value) or stored in an image format such as tiff, jpeg, or bitmap. The indexed table may be distributed across multiple computer servers as a distributed data store.

An untrained, or not yet fully trained, image classification convolutional neural network model is stored in the storage unit 704. The training process is a backward error propagation procedure which modifies configurable parameters in the convolutional neural network. For each pair of images and corresponding target similarity value, the training processor 703 is configured to extract a feature vector from each of the pair of images by executing the stored image classification neural network model on the respective images, computing a similarity value representing the similarity between the two feature vectors in accordance with the computing a similarity value of step S103, and, if there is a difference between the computed similarity value and the target similarity value, performing backward error propagation to modify the image classification neural network model to reduce the difference, wherein the extracting, computing, and backward error propagation are performed iteratively until either a predefined maximum number of iterations is reached or the difference falls below a threshold value. Backward error propagation is carried out by observing how the error (difference) changes as a function of one or more configurable parameters, and, by addressing the configurable parameters in turn, finding values for the configurable parameters that minimise the error, wherein the error minimisation is of an aggregate error across all pairs of training images which have been used to train the convolutional neural network so far.

The training processor 703 iterates over all of the pairs of images in the test data 701, trying to find features of the images that maximise the probability of the outcome (the computed similarity value) matching the corresponding target similarity value. Errors are then back propagated to the first layer of the convolutional neural network. Errors (i.e. a difference between the target similarity value for the pair and the computed similarity value for the pair) result in the adjustment of configurable parameters (such as weighting and bias factors) in the convolutional neural network being trained. The feedback loop continues until a predefined maximum number of repetitions is reached or the errors converge to an acceptable range.

An image classification neural network model such as LeNet or AlexNet could be stored as the image classification convolutional neural network model and trained by the training processor 703. As the input image data is normally large in size, convolutional neural network models effectively perform dimension reduction, reducing the input image data to a single vector of feature values per image, representing key features of the image representation of the portion of graph data.

The training can be parallelised by tiling the input images.

Training data can be obtained in the following three ways:
1) Reuse an existing image repository, e.g. MNist data set for digit recognition.
2) Purposely built, by: generate grayscale raster images; for each image, rotate and randomly edit to produce "new" images that are considered to some extent similar to the original image; and label the original image and the edited image pair with either "T/F" or a target similarity value. For example, the target similarity value may be obtained by quantifying a degree of the editing performed to obtain the new image from the original image in the pair, and representing the degree of editing in the target similarity value. In other words, an edit distance between the two images is calculated, wherein numeric values are assigned to operations that transform the original image into the new image, and the target similarity value is the aggregation of all the operations.
3) Obtain sample pairs of portions of graph data for which a similarity value is known or has been computed, or performing said computation, for example, using brute force comparison or graph edit distance. Subject the sample pairs of portions of graph data to the transformation processing of step S102. Use the pair of images so produced as a pair of training images for the convolutional neural network 704, with the (scaled if required) similarity value as the target similarity value.

Once the training processing is complete, a trained image classification convolutional neural network model is obtained, which can be applied directly to image data by the application apparatus, specifically by the extraction processor 102. Such direct application can be referred to as forward propagation.

Figure 8 illustrates an example of a convolutional neural network model. At each layer of the model, there are configurable parameters (such as weights and bias factors) to be learned (i.e. configured) using the pairs of training images and target similarity values. The purpose of such parameters is to aggregate input image data through multiple levels of abstraction and projection, so that the final extracted feature vectors of images can maximise the probabilities of computed similarity values that match the target similarity values and minimise the probabilities of computed similarity values that do not match the target similarity values.

The convolutional neural network model is a multilayer neural network architecture comprising one or more convolutional layers 801 (which convolve the input image data using configurable parameters), one or more sub-sampling layers 802 (which pool spatially related values from the convolution layers), and one or more fully connected layers (inner product layers) 803. The convolutional neural network also includes a configurable ReLu layer 804, which is an activation function that configures activation functions of neurons in the network. Inner-product layers are responsible for dimension reduction that condenses the size of features that need to be represented using numeric values. The inner product layers 803 may be configured in accordance with an image size, since the inner product layers are the final layers for dimension reduction, reducing the vectors of size hundreds to a smaller number of features.

Outcome of the training is a neural network model stored in a local storage which can be applied directly in the future. The diagram of Figure 8 is an example of CNN model. At each layer of this model, there are parameters (such as weights and bias factors) to be learned using the input annotated image pairs. The purpose of such parameters is to aggregate input data through multiple levels of abstraction and projection, so the final feature vectors of images can maximise the probabilities of assigned labels and minimise the probabilities of labels not assigned to the images.

## Claims

1. A computer-implemented method, comprising:
applying a transformation process to: a first portion of graph data to generate a first image, and a second portion of graph data to generate a second image;
applying an extracting process to: the first image to extract a first feature vector, and the second image to extract a second feature vector; wherein both the first feature vector and the second feature vector comprise quantifiable values for each of a common set of features;
computing a similarity value, the similarity value being a value representing the similarity between the first feature vector and the second feature vector based on the respective quantifiable values for the common set of features; and
outputting the computed similarity value.

2. The computer-implemented method according to claim 1, wherein:
the first and second portions of graph data each comprise a plurality of vertices interconnected by a plurality of edges, each of the edges connecting one of the vertices as a source vertex to another of the vertices as a destination vertex;
the transformation process comprising:
assigning each vertex in the respective portion of graph data a unique position in a first of the two dimensions and a unique position in a second of the two dimensions;
setting a pixel value at each entry in a two-dimensional array of pixel values, by:
for each of the plurality of edges, setting the pixel value at a corresponding entry as a value from a first range of values, the corresponding entry being the entry at the unique position assigned to the source vertex in the first dimension and the unique position assigned to the destination vertex in the second dimension; and
setting the pixel values at the remaining array entries at a value outside of the first range of values.

3. The computer-implemented method according to claim 2, wherein:
the plurality of edges comprise bi-directional edges, each of the bi-directional edges connecting two vertices to one another as both a source vertex and a destination vertex.

4. The computer-implemented method according to claim 2 or 3, wherein
the plurality of edges comprise edges weighted by a quantitative label, setting the pixel value at the corresponding entry for each of the edges weighted by a quantitative label comprising setting the pixel value at the corresponding entry as a value from the first range of values representing the quantitative label.

5. The computer-implemented method according to any of claims 2 to 4, wherein each of the plurality of vertices represents an entity, and the transformation process includes:
determining pairs of vertices, with one vertex from each of the first and second portions of graph data, that represent the same entity, and, for each determined pair, assigning the vertices in the pair to equivalent unique positions in the first and second dimensions of the respective two-dimensional array of pixel values.

6. The computer-implemented method according to any of the preceding claims, wherein the extracting process comprises applying an artificial neural network to the respective image to extract the respective feature vector.

7. The computer-implemented method according to claim 6, wherein
the artificial neural network is a convolutional neural network.

8. The computer-implemented method according to claim 7, further comprising:
training an image classification convolutional neural network model, and storing the trained image classification convolutional neural network model as the convolutional neural network, the training comprising:
obtaining a training set of image pairs, and for image pair from among the training set of image pairs, obtaining a corresponding target similarity value;
for each image pair from among the training set image pairs, in turn:
extracting a feature vector from each of the pair of images by executing the image classification neural network model on the respective images, computing a similarity value representing the similarity between the two feature vectors, and, if there is a difference between the computed similarity value and the target similarity value, performing backward error propagation to modify the image classification neural network model to reduce the difference, wherein the extracting, computing, and backward error propagation are performed iteratively until either a predefined maximum number of iterations is reached or the difference falls below a threshold value.

9. The computer-implemented method according to claim 8, wherein
obtaining the training set of image pairs comprises downloading image pairs from an image repository.

10. The computer-implemented method according to claim 8, wherein
obtaining the training set of image pairs comprises:
generating a set of original raster images;
for each of the original raster images, producing one or more new images by editing the original raster image, the editing including rotating and/or random pixel value editing, adding the original raster image with each of the one or more new images to the training set of image pairs.

11. The computer-implemented method according to claim 10, wherein
obtaining the target similarity value for each of the image pairs comprises quantifying a degree of the editing performed to obtain the new image from the original image in the pair, and representing the degree of editing in the target similarity value.

12. A computer-implemented method in a graph data storage system storing a data graph divided into portions of graph data, each portion of graph data being stored on one from among a plurality of physical data storage units, the method comprising:
receiving a portion of graph data for addition to the data graph;
selecting as candidate physical data storage units from among the plurality of physical data storage units the physical data storage units having sufficient available storage capacity to store the received portion of graph data;
for each candidate physical data storage unit, executing the computer-implemented method of any of claims 1 to 11 for the or each portion of graph data stored thereon, with the received portion of graph data as the first portion of graph data and the stored portion of graph data as the second portion of graph data, recording the or each computed similarity value for the candidate physical data storage unit, each candidate physical data storage unit having either a single computed similarity value or multiple computed similarity values, and if the candidate physical data storage unit has multiple computed similarity values, combining the multiple computed similarity values into a single computed similarity value by calculating a mean or maximum value of the more than one computed similarity values;
selecting the candidate physical data storage unit having the greatest single similarity value to store the received portion of graph data, and writing the received portion of graph data into the selected candidate physical data storage unit.

13. An apparatus comprising:
a transformation processor configured to apply a transformation process to: a first portion of graph data to generate a first image, and a second portion of graph data to generate a second image;
an extraction processor configured to apply an extraction process to: the first image to extract a first feature vector, and the second image to extract a second feature vector; wherein both the first feature vector and the second feature vector comprise quantifiable values for each of a common set of features;
a similarity value computer configured to compute a similarity value, the similarity value being a value representing the similarity between the first feature vector and the second feature vector based on the respective quantifiable values for the common set of features; and
an outputter configured to output the computed similarity value.

14. A computer program which, when executed by a computing device, causes the computing device to perform the computer-implemented method of any of claims 1 to 12.

15. A graph data storage system, comprising:
a plurality of physical data storage units each storing one or more portions of graph data from among a plurality of portions of graph data into which a graph database is divided; and
a database management system configured to execute the computer-implemented method of claim 12.
